# EUROPEAN PATENT APPLICATION

(11) **EP 4 697 127 A1**
(43) Date of publication of application: **18.02.2026**
(21) Application number: 25195800.5
(22) Date of filing: 13.08.2025
(51) Int. Cl.: G05G 25/04, G05G 1/08, E03C 1/05

(54) **KNOB ASSEMBLY FOR USE IN WET ENVIRONMENT**

(30) Priority: 14.08.2024 GB 202411961
(71) Applicant: AQUALISA PRODUCTS LIMITED, Westerham, Kent TN16 1DE (GB)
(72) Inventor: SNELL, Jake, Westerham, TN16 1DE (GB); MILLER, Phil, Westerham, TN16 1DE (GB); CLARK, Stuart, Westerham, TN16 1DE (GB)
(74) Representative: J A Kemp LLP

(57) **Abstract**

An assembly for use in a wet environment, the assembly comprising: a component; a dial which is movable relative to the component in a linear direction along an axis and is rotatable relative to the component about the axis; a spring-back member configured to move the dial parallel to the axis to return the dial to a predefined position along the axis; a bearing positioned between the dial and the component; and a sensor configured to detect the position of the dial along the axis and/or the rotation of the dial.

## Description

The present invention relates to an assembly, a controller fascia for a water related system, a controller for a water related system, and a water related system comprising the controller.

Many water related systems require interaction with fluid and are configured to receive user input. Water related systems, such as showers, include a controller to allow the user to control specific characteristics of water flow within the system. For example, the controller may include an assembly which allows user input to control the temperature and/or flow rate of water in the system, e.g. the temperature and/or flow rate of water flowing out of a shower system.

Some mechanical controllers may include an assembly which allows user input, but which may include potential leak paths which allow ingress of water into the controller. Known controllers for water related systems may include a potentiometer mounted on a PCBA with geared mechanical parts, however, such an assembly uses a through hole through the moldings which runs the risk of allowing water to enter into the controller.

It is known that degradation of the controller over time may be expedited by a surrounding wet environment due to water entering into the controller. Additionally, for any controller which includes electronics, such as a PCBA, it is particularly important to avoid water contacting the internal controller. Thus, controllers for use in a wet environment, such as a shower, have particular considerations and preferably, extra precautions are taken to seal controllers from water getting inside the controller. Known controllers for use in such wet environments have limited efficacy in sealing the internal parts of the controller from water. Furthermore, such known controllers (for use in such wet environments, e.g. for use in a shower) have limited input functionality, for example, only allow for rotary input.

Thus, it would be beneficial to provide an assembly for use in a water related system, such as a shower, which allows for additional user input, for example via push and rotation. Additionally, it is beneficial to provide an assembly which reduces the likelihood of ingress of water to the assembly/controller.

According to the present invention, there is provided an assembly for use in a wet environment, the assembly comprising: a component; a dial which is movable relative to the component in a linear direction along an axis and is rotatable relative to the component about the axis; a spring-back member configured to move the dial parallel to the axis to return the dial to a predefined position along the axis; a bearing positioned between the dial and the component; and a sensor configured to detect the position of the dial along the axis and/or the rotation of the dial.

According to the present invention, there is provided a controller fascia for a water related system comprising the assembly.

According to the present invention, there is provided a controller for a water related system, the controller comprising the assembly, wherein the controller is configured to determine an input based on the position of the dial along the axis and/or the rotation of the dial and the controller is configured to control a characteristic of water flow in the water related system based on the input.

According to the present invention, there is provided a controller for a water related system, the controller comprising the controller fascia, wherein the controller is configured to determine an input based on the position of the dial along the axis and/or the rotation of the dial and the controller is configured to control a characteristic of water flow in the water related system based on the input.

According to the present invention, there is provided a water related system comprising the controller.

The invention will be more clearly understood from the following description, given by way of example only, with reference to the accompanying drawings, in which:
Figure 1 illustrates an exemplary assembly according to a first embodiment;
Figure 2 illustrates an exploded view of some of the parts of the assembly of figure 1;
Figure 3a illustrates an exemplary component of figure 1, and figure 3b illustrates the same component of figure 3a with a cutaway;
Figure 4 illustrates an exemplary bearing for use in the assembly of figure 1;
Figure 5 illustrates an alternative exemplary assembly of the first embodiment;
Figures 6a and 6b illustrate an exemplary bearing for use in the assembly as in figure 5;
Figure 7 illustrates an exemplary assembly according to a second embodiment;
Figures 8a and 8b illustrate a part of the component and the bearing of the assembly of figure 7;
Figure 9 illustrates an exploded view of some of the parts of figure 7;
Figure 10 illustrates an exemplary assembly according to a third embodiment;
Figure 11 illustrates an exploded view of some of the parts of the assembly of figure 10;
Figure 12 illustrates an exemplary assembly according to a further embodiment; and
Figures 13A and 13B illustrates an exemplary controller according to an embodiment.

The same references are used for similar features throughout the drawings. The features shown in the figures are not necessarily to scale and the size or arrangements depicted are not limiting. It will be understood that not all of the features of the assembly are depicted in each figure and the figures may only show a few parts relevant for describing a particular feature.

The present invention is for use in a wet environment, i.e. is suitable for use in a wet environment. The assembly is therefore able to interact with water or a very humid environment. The assembly may be for use in a bathroom environment. Although bathrooms should be provided with appropriate ventilation, it is common for bathrooms to become particularly humid, e.g. when a shower, bath and/or basin is used to provide hot water. The assembly may be for use in a shower, i.e. a shower environment, e.g. such as within a shower cubicle/enclosure. However, the assembly is not limited for use in a bathroom, or even shower environment such as a shower cubicle/enclosure. The assembly of the present invention can be used with a water related system. Thus, the assembly may be suitable for use in a water related system, and in particular, may be positioned in a wet environment. The present invention can be useful for use in or with any water related system, particularly where the controller is positioned in a wet environment, i.e. to interact with water or a very humid environment. Thus, the invention may be used in an environment in which water contacts the invention and may be particularly useful with devices intended for use in the bathroom. However, the assembly may be used for controlling other devices (even those outside the bathroom). The assembly may be particularly useful for systems which comprise electrical equipment, as the assembly can allow an input (i.e. a mechanical input via movement of a part of the assembly) to be provided to an electronic system whilst also having the assembly safely positioned in the wet environment.

The present invention provides an assembly that can be used to provide user input, for example to a controller of a water related system, such as a shower. The assembly is beneficial in that the parts of the assembly which allow for user input are external and so a controller comprising the assembly can be sealed effectively from the wet environment to reduce or prevent leak paths into the controller.

Overall, the assembly allows for a user to provide an input via a dial which can be pushed or rotated so that input can be provided in different ways by the user. The assembly is configured so that when attached to, or forming part of, a controller, the parts of the assembly are external to the controller without providing any leak paths into the controller via the assembly.

For example only, when the dial is pressed, this may turn a water related system on or off. For example, when the dial is pressed and held, e.g. for over a predetermined period of time such as a couple of seconds, an outlet of the water related system may be switched, e.g. between a main shower head and an additional shower head. For example, rotating the dial may adjust a characteristic, such as a temperature, to increase or decrease depending on the amount and direction of rotation of the dial. The dial may be the part of the assembly via which a user interaction is input. The whole dial may be moved together, e.g. to rotate and/or move in the linear direction. Thus, the dial may be formed by a body which is moved to provide user input to the assembly.

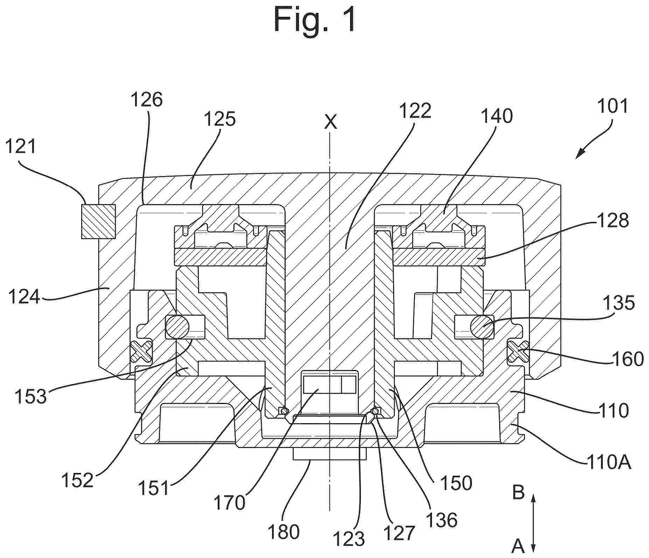

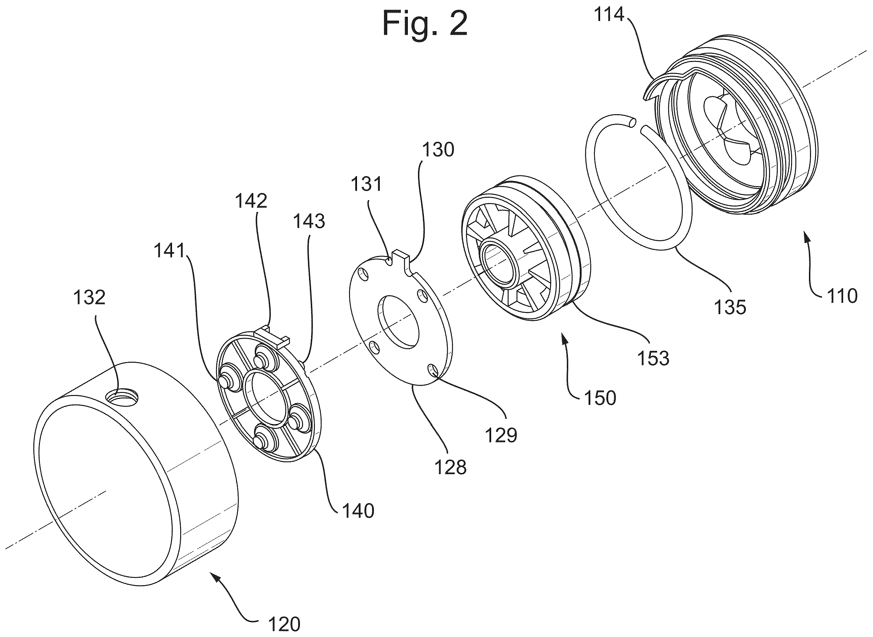

Figure 1 depicts a first embodiment of the present invention with various parts of the embodiment shown in an exploded view in figure 2.

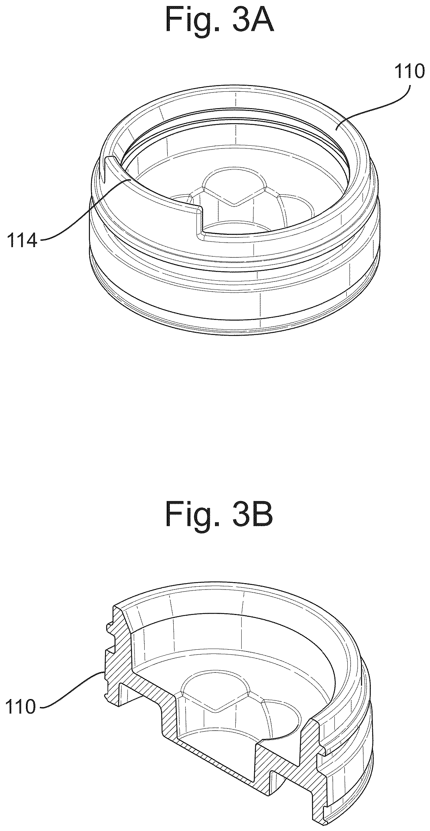

Figures 1 and 2 illustrate a configuration of assembly 101 in accordance with a first embodiment. The assembly 101 comprises dial 120 and component 110. The component 110 is shown in further detail in figures 3a and 3b. The component 110 is shown as being formed of a single part, although it may be made of multiple parts. The component 110 effectively forms a fixed (i.e. stationary) part of the assembly 101 about which at least some other parts of the assembly may move, such as the dial 120.

The dial 120 is rotatable relative to the component 110 about an axis X. Preferably the axis X is a central axis, i.e. a central axis through the dial 120, although this is not a necessity. The dial 120 is movable relative to the component 110 in a linear direction along the axis X. Thus, the dial 120 can move in the directions shown by the arrows A and B in figure 1. The whole dial may be rotatable and movable in the linear direction. The same parts of the dial may be moved in the linear direction and may be rotated. This may provide a simplified input for the user and may be more aesthetically pleasing compared to having separate/alternative parts for different types of input.

The dial 120 preferably comprises a shaft 122 about which the dial 120 rotates. The axis X may be a longitudinal axis through the shaft 122. The shaft 122 may comprise a notch 123 around the circumference of the shaft 22. As shown in figure 1, the notch 123 has a reduced diameter, e.g. compared to a diameter along substantially the length of the shaft 122.

The dial 120 may be of a substantially cylindrical shape with a housing forming a main body of the dial 120. The housing may be formed of a main face 125 and a dial sleeve 124, which is the curved surface extending from the perimeter of the main face 125 in figure 1. The dial sleeve 124 and the main face 125 may be integral. The shaft 122 may be connected to the housing. The shaft 122 may be connected to the main face 125, i.e. one end of the shaft 122 may be connected to the main face 125. The shaft 122 and the housing may be integral, as shown in figure 1. The shaft 122 may be integral with the main face 125 and the dial sleeve 124. It is noted that this is not a necessity and these parts, i.e. the shaft and/or main face and/or dial sleeve, could be provided by separate pieces which are connected together.

The assembly 1 may comprise a spring-back member 140 configured to move the dial parallel to the axis X (i.e. along the axis X) to return the dial to a predefined position along the axis X. The spring-back member is configured to allow the dial to be offset, and is configured to return the dial to its original position afterwards, i.e. to spring the dial back to its predefined position. The predefined position being the position of the dial when there is no user interaction/the dial is not pressed. The predefined position may be referred to as the stable or initial position. The spring-back member may be positioned between the bearing 150 and the dial 120. In particular, the spring-back member may be positioned between a main face 125 of the dial and the bearing 150.

The spring-back member may be any device which allows the dial to be pressed and is configured to return the dial to its predefined position. The spring-back member may be an elastic member, e.g may be configured to be compressed (e.g. by the user pressing the dial) and to return to its initial shape afterwards (e.g. when the dial is released by the user). The spring-back member may be connected to, or form part of, other parts of the assembly, e.g. the dial 120 and/or the component 110.

As shown in figures 1 and 2, the spring-back member 140 may be a button membrane. The button membrane 140 may be formed of elastic material, e.g. rubber. The button membrane may comprise at least one, and preferably multiple, protrusions 141 which extend toward an inner face 126 of the housing. The protrusions 141 can be depressed and when released, will return to their original state. Thus, the button membrane 140 may be configured to allow the dial to be moved in the linear direction along the axis as indicated by arrows A and B in figure 1. When the dial is pushed in the direction A along the axis X, the protrusions are depressed, and when released, the protrusions apply a force to move the dial in direction B, back to the predefined position along the axis X.

In the present embodiment, the assembly 101 comprises a support. The support may be provided as a plate 128 as shown in figures 1 and 2. The plate 128 may be an annular plate, as shown. The plate 128 may be configured to support the button membrane 140. The button membrane 140 may be positioned between the plate 128 and the dial 120. As the button membrane 140 may be formed of elastic material, the support 128 is beneficial in providing a rigid platform on which the button membrane can be positioned and which the protrusions 141 can move relative to in the linear direction along the axis X.

The button membrane 140 and plate 128 may be configured to rotate together. The button membrane 140 and the plate 128 may be configured to rotate with the dial 120. For example, the plate 128 may comprise a protrusion 130 configured to prevent relative rotation between the plate 128 and the dial housing. The protrusion 130 may be keyed to an inner surface of the dial 120. For example, the inner surface of the dial housing may have a recess (not shown) in which the protrusion 130 fits which prevents relative rotation between the dial housing and the plate 128. The button membrane 140 may have at least one projection 143 to fit within at least one corresponding receiving portion 129 on the plate 128. The receiving portion 129 may be an aperture and/or through hole in which the projection 143 can be received. Preferably, there are multiple projections 143 and corresponding receiving portions 129. Preferably, the multiple projections 143 and corresponding receiving portions 129 are radially spaced apart so that there is a link between the button membrane 140 and the plate 128 at different points towards the outer edge of the plate 128.

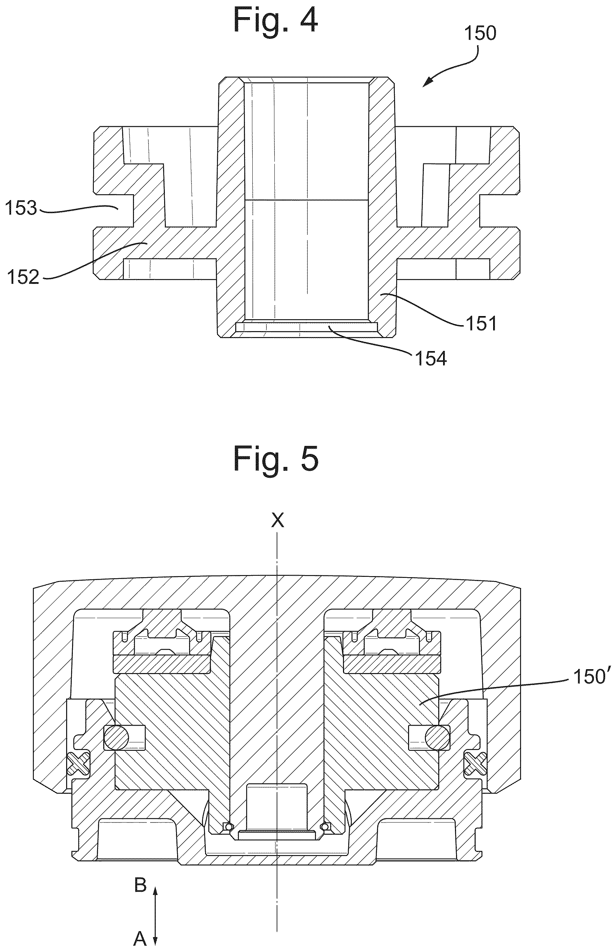

The assembly 101 comprises a bearing 150 positioned between the dial 120 and the component 110. More particularly, the bearing 50 may be positioned between surfaces of the dial 120 which are configured to rotate and supporting parts of the component 110. Preferably, the bearing 150 is positioned between the shaft 122 and the component 110. The bearing is shown in further detail in figure 4. Preferably, the bearing 150 is a separate component from other parts of the assembly 101, e.g. the bearing 150 and the spring-back member 140 are separate.

Providing a bearing is beneficial in reducing friction between moving and non-moving parts to allow smooth operation of the assembly 101. The bearing 150 is beneficial in reducing/preventing much wobble/rock of the dial 120. Thus, the bearing is beneficial is creating a premium feel for the user when the dial 120 is rotated and pushed.

Specifically, the bearing 150 may have a main central cylindrical portion 151, a flange portion 152, and a recess 153 in the flange portion 152. The main cylindrical portion 151 may be configured to receive the shaft 122 of the dial 120. The bearing 150 may be retained in the component 110. In the present embodiment, the bearing 150 is retained by a snap fit ring 135 positioned between the bearing 150 and the component 110. For example, the bearing 150 is retained in the component 110 by the snap ring 135 which sits within the recess 153. Although alternative fastening mechanisms may be used instead or as well. Use of a snap ring 135 is beneficial in that it is relatively cheap and easy to obtain. Other forms of retaining ring or alternative fastening mechanisms may be used, e.g. adhesive or welding.

The bearing 150 may comprise a recess 154 on an inner surface at the base of the main central cylindrical portion 151. The assembly 101 may comprise a retaining ring 136, e.g. a circlip, positioned between the dial 120 and the bearing 150. The retaining ring 136 may sit within the notch 123 on the shaft 122 of the dial 120. The retaining ring 136 may sit within the recess 154 of the bearing 150. The retaining ring 136 may allow the dial 120 to be inserted into the bearing 150, and once the dial 120 is in position, the retaining ring 136 is configured to resist removal of the dial 120 from the bearing 150.

For example, the bearing 150 may be a bushing. For example, the bearing may be made of acetal. For example, the bearing may be moulded. However, the bearing 150 may be formed in any appropriate way from any appropriate material. For example, the bearing may be machined, as described further below in relation to bearing 150'. There may be advantages either way. For example, moulding the bearing may mean that there is a small draft angle internal to the main central cylindrical portion 151 which may mean there is a small risk of dial wobble during rotation. Machining the bearing may avoid such a draft angle and may allow tighter tolerances to be achieved. However, machining the bearing may cost more overall.

The combination of the retaining ring 136 and the snap ring 135 are beneficial in resisting removal of the dial 120 from the assembly 101.

Preferably, the bearing 150 and the spring-back member are provided to control movement of the dial 120. In particular, the rotation of the dial can be controlled by the bearing, in that the bearing limits the way in which the dial rotates so that the dial rotates about the axis X. Although there are preferably tight tolerances between the bearing 150 and the shaft 122 of the dial 120, the bearing 150 may not affect linear movement of the dial 120. Thus, the dial 120 may move freely in the linear direction within the bearing 150 (were it not for the retaining means, e.g. the retaining ring 136 keeping the dial from further upwards linear movement, i.e. out of the assembly). However, the movement in the linear direction can be controlled by the spring-back member which allows for the dial to be pushed inwards, and then returns the dial to its original position.

The assembly 101 may also comprise a sensor 180. The sensor 180 is configured to detect the position of the dial 120 along the axis X. Additionally or alternatively, the sensor 180 is configured to detect the rotation of the dial 120. Although the sensor 180 may be implemented in a number of different ways, in the present instance the sensor 180 is used to detect a magnet. The sensor 180 may be configured to detect the position of the dial 120 along the axis X as well as the rotation of the dial 120. This may be beneficial in reducing the number of parts and/or cost of the device.

Preferably, the sensor is an electronic sensor. Preferably, the sensor is configured to determine movement and/or position of the dial. Preferably, the sensor is configured to convert mechanical movement of the dial into an electronic signal indicative of the dial rotational and/or linear position. The sensor 180 may be part of, or in connection with, other electronic components, such as a printed circuit board assembly (PCBA).

The sensor 180 may be positioned so as to reduce exposure to a wet environment in which the assembly 101 can be provided. For example, the dial 120 may be on one side of component 110 (i.e. facing outwards towards a user), and the sensor 180 may be positioned on an opposing side of the component 110 (i.e. inwards, e.g. towards other parts of a controller and/or enclosed space and/or a sealed environment). This is beneficial in that the dial can be provided in a wet environment, whilst protecting the sensor in a dry environment. Alternatively, the sensor 180 can be positioned within the component (e.g. sealed within at least part of component 110) and/or part of a controller fascia (e.g. a control panel fascia). Thus, the sensor 180, which can be used to detect the position of the dial along the axis and the rotation of the dial, can be positioned on an opposing side of the component 110 to the dial 120, or within the component 110 and/or within a controller fascia. More generally, it will be understood from the above that the sensor may not be positioned as part of, or within, the dial 120. This means that the dial itself does not need to include any sensor for determining the position of the dial. As such, any electronics associated with the sensor 180 can be positioned in the dry environment, i.e. protected from the wet environment. The dial 120 preferably does not comprise any electronics, and in particular, may not comprise any electronics associated with sensing via the sensor 180. Thus, this can reduce likelihood of exposure of electronics to the wet environment.

The assembly 101 may further provide a magnet 170. The magnet 170 may be attached to the dial 120. In particular, the magnet 170 may be attached towards an end of the shaft 122, i.e. towards an end of the shaft 122 which is not connected to the main face 125. The magnet 170 may be positioned towards the component 110 and particularly, towards where the sensor 180 is positioned. The magnet 170 is shown as cylindrical, but can be provided in any appropriate shape, for example, annular. The magnet may be positioned within a part of the dial, e.g. held within an internal space in the dial.

As will be clear from the above, the sensor 180 is configured to detect the position of the dial 120 along the axis and the rotation of the dial 120 based on (i.e. using/due to interaction with) the magnet 170 attached to the dial 120. This is beneficial in that movement of the dial 120 alters the position of the magnet 170, such that movement of the dial 120 (both linearly and rotationally) can be detected by the sensor 180.

The linear position of the dial 120 and the rotational position of the dial 120 can be determined using the same magnet attached to the dial. This is beneficial in that only a single magnet may need to be provided. Although additional magnets may be provided for interacting with the sensor to monitor dial position, such additional magnets would also preferably be attached to the dial. This is also beneficial in that a single sensor, or groups of sensors, may be used to determine the position of the dial 120. This means that electronics associated with the sensor (i.e. a single sensor or group of sensors) can be positioned together, and thus, more easily protected from the wet environment as described above.

The magnet 170 may be a diametric magnet. Thus, the poles of the magnet 170 may be located on opposite sides of the faces of the magnet, not in the centre of the faces. For use with such a magnet, the sensor 180 may be a three-axis hall sensor. Such a sensor 180 may be capable of determining the relative position of the magnet 170 in a direction along the axis X and the rotation of the magnet 170 about the axis X. In this way, the sensor 180 can be used to detect the position of the dial 120 in the linear direction along the axis X (i.e. in the direction shown by arrows A and B) and/or the rotation of the dial 120. Use of such a sensor is beneficial in providing accurate readings of the linear and rotational position of the dial 120.

Alternative sensors could be used. For example, a dual axis sensor may be used to determine rotation of the dial 120. The dual axis sensor may be used in combination with another sensor to determine the position of the dial 120 in the linear direction, which may be used simultaneously. For example, at least one infrared sensor may be used. For example, a motion sensor or passive infrared sensor (PIR) may be used, which is an electronic device that detects the movement of an object anywhere within its field of view by measuring the light emitted from that object. In this case, a reflective surface (such as a mirror) with slits (or multiple reflective surfaces) could be used instead of the magnet 170 and the sensor could be positioned in the same place, with a translucent portion of the component 110 between the sensor and the reflective surface. This would allow rotation of the dial to be determined. A sensor for determining the position in the linear direction may be used simultaneously. For example, a separate infrared sensor may be used to determine the position in the linear direction, e.g. by providing a sensor radially outwards of the dial with a reflective portion on the dial 120 which reflects a signal to the sensor when the dial is pushed in. In this case, a portion of the component 110 between the sensor and the reflective surface can be translucent and there may be a gap or aperture in other parts of the assembly, such as the bearing, to allow the signal to be detected. Other light sensors may be used for determining rotational or linear changes in position, e.g. which rely on emitting a signal and detecting a signal. Additionally or alternatively, photoelectric sensors could be used with an emitter and receiver on different parts of the dial, although this would need multiple receivers to detect the different positions. Additionally or alternatively, capacitive sensors could be used to detect the proximity of the dial, i.e. the position along the axis X, and so would work well for determining the position of the dial in the linear direction, i.e. to determine whether the dial is pushed in or in the predefined position. Although it is preferable to keep the parts of the dial external to the rest of the controller (as shown throughout the figures), an alternative would be to connect the dial mechanically to the sensor via an aperture in the component 110. For example, in this case, the assembly may use a rotary encoder through which there is a potentiometer on a PCBA with a gear that attaches to a gear profile on the dial and they rotate together.

Additionally or alternatively, multiple sensors could be used, for example one sensor to detect the linear position of the dial 20 and one sensor to detect the rotation of the dial 20.

The assembly may be configured to reduce or prevent ingress of water. In particular, the assembly may reduce of prevent ingress of water to parts of the assembly which move relative to each other to improve the feel for the user and/or improve lifetime of the assembly 101. The dial and the component may be shaped so as to reduce or prevent ingress of water. For example, there may only be a small gap between dial sleeve 124 and the component 110 which may reduce or prevent ingress of water. Additionally or alternatively, the assembly 101 may comprise a seal 160. The seal 160 may be positioned between the component 110 and the dial 120. More particularly, the seal 160 may be positioned between a radially outwards surface of the component 110 and the dial 120. The seal 160 may sit within a recess on a radially outer surface of the component 110. As shown in figure 1, the seal 160 is provided in a recess formed by the component 110 to maintain the position of the seal. The seal 160 is configured to reduce and/or prevent ingress of water to internal parts of the assembly 1, e.g. to prevent water accessing parts of the assembly 101 which move relative to each other, e.g. the shaft 122 and bearing 150. The seal 160 may be positioned around an outer circumference of the component 110 and extends radially outwards of the component 110 to form a seal within a surface of the dial 120. The seal 160 is beneficial in reducing or preventing ingress of water into the assembly. This is beneficial in reducing or preventing water contacting moving surfaces within the assembly 101 (i.e. the internal mechanical parts) which can reduce the lifetime of the assembly 101 and/or can affect the feel for a user interacting with the dial. Thus, the seal beneficial improves movement of the mechanical parts (which provides improved user feel during operation of the dial). Any appropriate seal may be used.

The dial 120 may comprise an indicator 121. The dial housing may comprise an aperture 132 in which a dial indicator 121 may be attached. The dial indicator 121 and aperture 132 may have corresponding threading to attach the dial indicator. The dial indicator 121 may be useful to inform the user of the rotational position of the dial 120. The dial indicator 121 is entirely optional. An alternative indicator may be provided, such as an indent on a surface of the dial housing or a painted line or dot. No indicator may be provided.

To put together the assembly 101 of figure 1, the bearing 150 can be retained in the component 110. The snap ring 135 may be provided in the recess 153 on the radially outer surface of the bearing 150. The bearing 150 can be pushed into place within the component 110. The snap ring 135 may retain the bearing 150 in position in the component 110, i.e. may prevent the bearing from moving relative to the component 110. The support plate 128 and button membrane 140 can be positioned on top of the bearing 150. The dial 120, with the retaining ring 136 positioned in notch 123, can be mounted on the rest of the assembly 101 by inserting the dial 120 into the bearing 150. The shaft 122 may have angled portions 127 at the end of the shaft 122 to more guide the shaft 122 into the bearing 150. Preferably, the angled portions 127 provide a chamfered edge at the end of the shaft 122. The dial 120 can be pushed onto the assembly 101 until the retaining ring 136 sits within the recess 154. As noted above, the seal 160 can be provided between the component 110 and the dial 120. The seal 160 may be positioned around an outer circumference of the component 110 and extends radially outwards of the component 110 to form a seal within a surface of the dial 120.

The configuration as shown in figure 1 may be a predefined position of the assembly, i.e. wherein the dial will stay in substantially the same position along the axis X unless a user pushes on the dial.

The assembly 101 may be configured to resist removal of the dial 120 from the assembly 101, i.e. when the assembly has been put together as shown in figure 1. In particular, the retaining ring 136 and snap ring 135 may resist removal of the dial shaft 122 from the bearing 150, and removal of the bearing 150 from the component 110 respectively.

The assembly 101 is configured so that when the dial 120 is offset from the predefined position, the button membrane 140 applies a force to return the dial 120 to the predefined position. In particular, when the dial housing is pushed along the axis X in a direction A (i.e. into the assembly 101) the button membrane 140 is compressed, allowing for linear movement of the dial 120 along the axis X. The plate 128 does not move in the linear direction. The plate 128 is held in position along the linear axis X by the bearing 151. When the user releases the dial 120 the button membrane 140 applies a linear force on the inner surface 126 of the dial 120 which moves the dial 120 in a second linear direction along the axis X, for example in the direction of arrow B in figure 1, i.e. opposite the first linear direction. Thus, the button membrane 140 returns the dial 120 to the predefined position along the axis X. In other words, the button membrane 140 is configured to move the dial 120 back to its original position.

As described above, the button membrane 140 and plate 128 are configured to rotate together, and the plate 128 and the dial 120 are configured to rotate together such that when the dial 120 is rotated by a user, all of the dial 120, the button membrane 140 and the support plate 128 are configured to rotate about the axis X.

The dial 120 may be prevented from being moved further along the axis X in direction A due to at least one end stop provided in the assembly 101. The component 110 may comprise at least one end stop, such as end stop 114 shown in figures 2 and 3a, which may define a range of linear movement of the dial 120 in the direction along the axis X. The end stop 114 may define an end of the range of linear movement of the dial 120 in that an internal surface of the dial housing may contact the end stop 114 when moving in direction A which may prevent further movement in the linear direction. Additionally or alternatively, the range of movement in the linear direction may be limited in other ways, for example, the dial 120 may be prevented from being moved further along the axis X in direction A due to the limited distance between the bottom of the shaft 122 and the component 110. Alternatively, when the end stop 114 is provided there may be a small gap between the end of the shaft 122 and the component 110 even when the dial is pushed inwards by the user. This may allow the dial 120 to be more easily rotated when also pushed inwards.

The end stop 114 may also be used to define the ends of the range of rational movement of the dial 120. For example, the end stop 114 of component 110 is configured to limit rotation of the dial 120 relative to the component 110 by preventing further rotational movement of the protrusion 130.

Additionally or alternatively, the dial 120 may comprise ends stops protruding from an internal face which may define a range of linear motion of the dial 120 in the direction along the axis X and/or the range of rotational motion. Such end stops of the dial may interact with the protrusion 114.

Preferably, the button membrane comprises projections 142 which sit on either side of the protrusion 130. The projections 142 may sit within small recessed portions 131 either side of the protrusion 130. The projections 142 may assist in limiting/preventing rotation between the button membrane 140 and the plate 128. The projections 142 may provide the additional advantage of providing a soft stop for the rotational movement of the dial 120 as the projections 142 being provided on either side of the protrusion 130 means that the elastic projections 142 will contact the end stop 114 of component 110 when either end of the rotational range is reached.

The component 110 may form at least part of a surface of a controller fascia. The controller fascia may otherwise be referred to as a control panel fascia. The component may have attachment portions, e.g. clip in portions 110A, for mating with a surface of the controller fascia. The component 110 may form at least part of a surface of the controller fascia and the dial 120 and spring back member 140 may be external to the surface of the controller fascia. For example, the dial 120 may be on one side of the component 110 and the sensor 180 and other parts of the controller may be provided on another side of the component 110. In the present embodiment the whole component 110 may be connected to and/or form part of the controller fascia. The component 110 may be attached to, or may be integral with, the controller fascia. Preferably, the component 10 which is attached to a part of the controller fascia forms a solid boundary. The component 110 which is attached to a part of the controller fascia may not have apertures (i.e. through-holes through which water may pass). In other words, other parts of the assembly 1 may be external to the controller fascia. This prevents ingress of water into the controller.

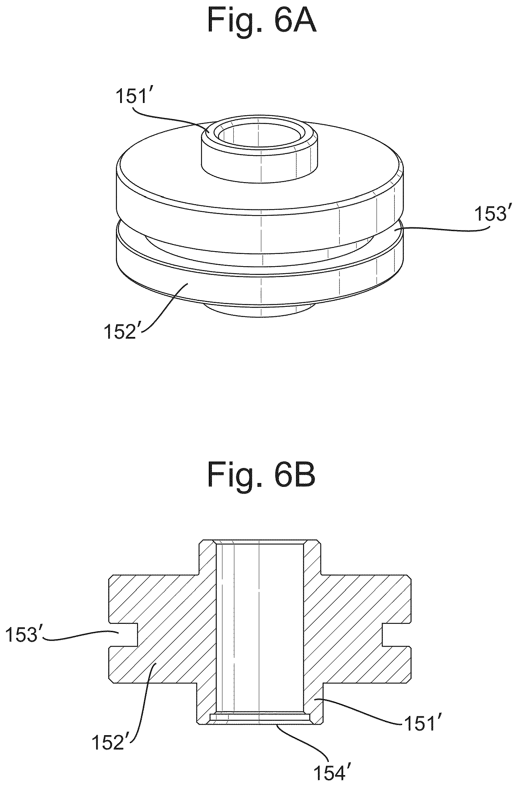

The bearing 150 as shown in figures 1, 2 and 4 may be relatively easily made by molding. However, alternative shapes may be provided. For example, a bearing 150' as shown in figures 5, 6a and 6b may be provided as an alternative. The bearing 150' shown in figures 5, 6a and 6b may be more easily manufactured by machining. As will be clear from figures 1-6b, the alternative shown in figure 5, 6a and 6b has similar components in that the bearing 150' has a main cylindrical portion 151', a flange portion 152', a recess 153', and a recessed portion 154'.

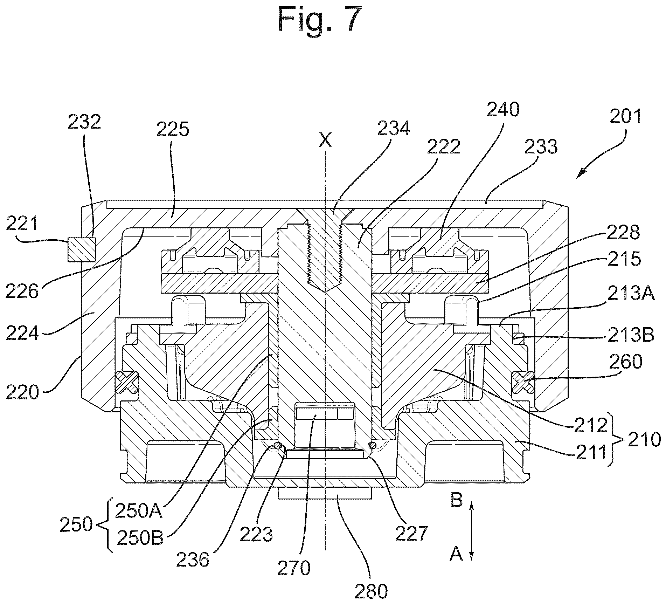

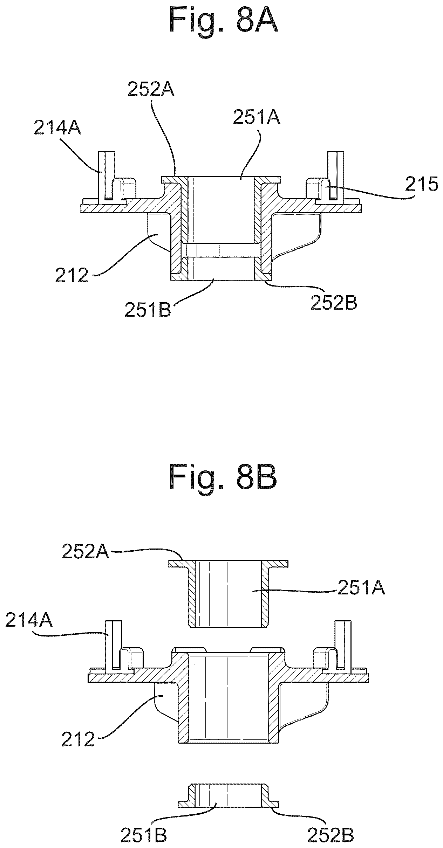

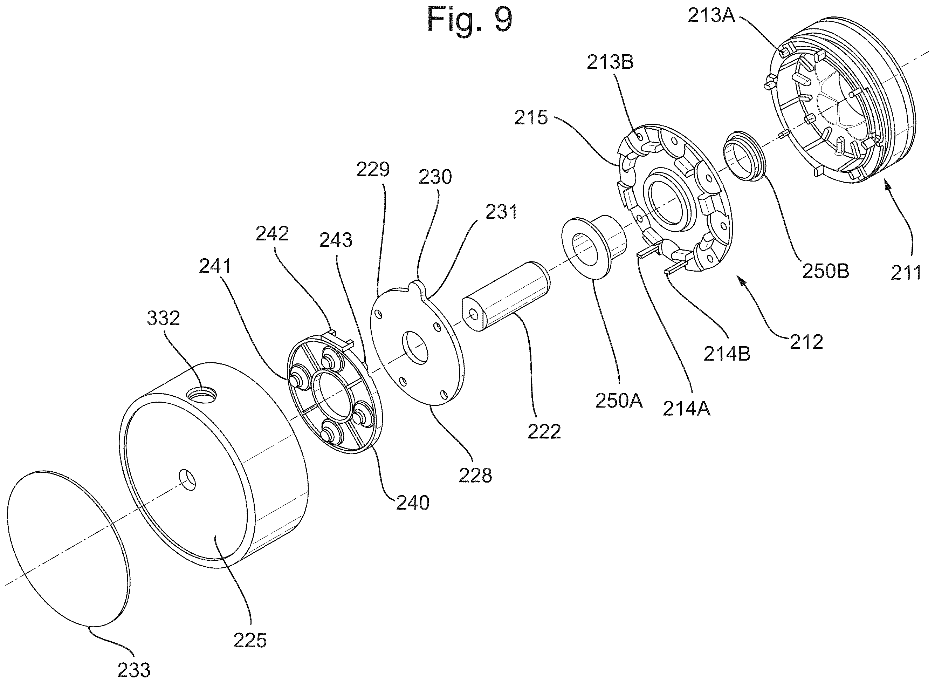

Figure 7 depicts a second embodiment of the present invention with various parts of the embodiment shown in an exploded view in figure 9, and the bearing 250 and a part of the component 210 shown in figures 8a and 8b.

The assembly 201 as shown in figures 7 and 9 may include many of the same, or similar, parts as the assembly 101 described in relation to figures 1-3b. For example, the assembly 201 comprises a component 210, a dial 220, an indicator 221, a spring back member 240, a plate 228, a seal 260, a magnet 270 and a sensor 280 which are similar to the component 110, dial 120, indicator 121, spring back member 140, plate 128, seal 160, magnet 170 and sensor 180 respectively, and provide similar movement of the assembly, as described in relation to the first embodiment (including any alternatives, e.g. alternative sensors etc.). Due to the similarities of certain parts of these embodiments, only the differences between the present embodiment and assembly 101 of the first embodiment will be described.

Although the previous embodiments show the dial and housing to be integral, in the present embodiment the dial 220 is shown to be made up of separate pieces which are connected together. In particular, in the present embodiment the dial 220 may comprise a cover 233, the shaft 222 about which the dial 220 rotates, the main face 225 and the dial sleeve 224. The shaft 222 may be connected to the housing (i.e. the main face 225 and the dial sleeve 224 - which may or may not be integral) by a screw 234. Multiple fasteners may be provided. Additionally or alternatively, other methods of joining may be used, for example, alternative mechanical fasteners, adhesive, welding, etc.. Use of such joining methods may be relatively cheap and easy to obtain/carry out. The cover 233 can be attached to the housing to conceal the screw 234. The cover 233 may snap fit into the housing. The cover 233 could be attached in any other way, for example by welding or adhesive. It is noted that the dial 220 of the present embodiment could be integral as described in any of the previous embodiments instead.

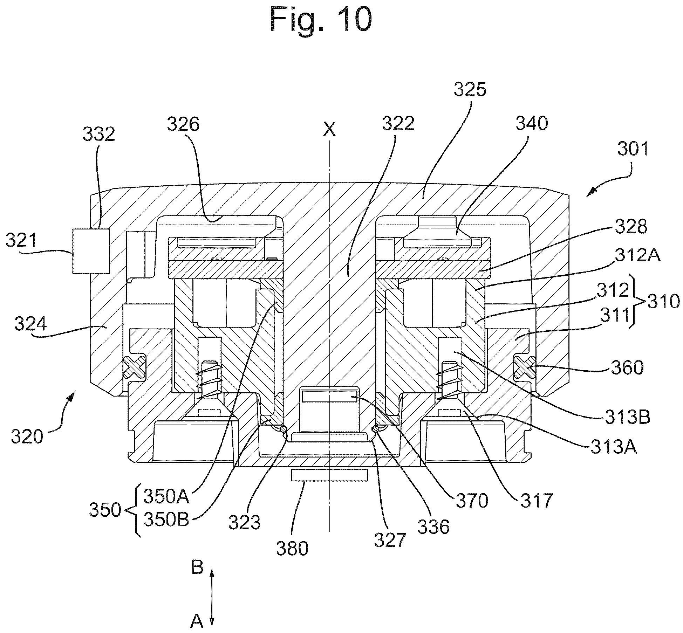

The component 210 may be made of multiple parts, such as the first part 211 and the second part 212 as shown in figures 7, 8a, 8b and 9. In the present embodiment the component 210 comprises a first part 211 and a second part 212. The first part 211 of the component 210 may be joined to the second part 212 of the component 210. In the present embodiment the posts 213A extending from the first part 211 may fit within corresponding apertures 213B in the second part 212. The post 213A may be melted so as to affix the first part 211 to the second part 212. The first part 211 and the second part 212 may be joined together using any appropriate means. For example, the first part 211 and the second part 212 may be connected by adhesive and/or welded together. Additionally or alternatively, the first part 211 and the second part 212 may be connected via screws, for example as indicated by the screw holes shown in figure 10.

In the first embodiment, the plate 128 was supported on the bearing 150. In the present embodiment, the plate 228 is supported on bearing 250. However, the bearing 250 only provides support to the plate 228 in a central zone surrounding the shaft 222.

As shown in figures 7, 8a, 8b and 9, the first part 211 may comprise support posts 215. The support posts 215 are provided as protrusions from a surface of the first part 211 which extend towards the support 228. The support posts 215 allow for a gap between the base of the support 228 when the support 228 is orthogonal to the shaft 222. As the dial 220 is rotated by a user, the support posts 215 may be beneficial in avoiding significant rocking of the dial as the dial is rotated. Thus, the support post 215 can retain the support 228 and the button membrane 240 in a substantially orthogonal position relative to the shaft 222.

As previously described, the component 210 may comprise an end stop configured to define at least one end of the range of linear movement and/or the ends of the range of rotational movement. In the present embodiment, end stops 214a and 214b are provided on the second part 212. The end stops 214a and 214b are configured to limit rotation of the dial relative to the component 210 by preventing further rotational movement of the protrusion 230. It is noted that the end stops 214a and 214b could instead be provided on the first part 211 and could protrude through openings in the second part 212 for example and/or on the dial housing. Preferably the end stops 214a and 214b are on the first part and/or the second part. The end stops 214a and 214b may provide an end of the range of linear movement of the dial 220 due to the inner surface 226 of the dial 220 contacting the end stops 214a and 214b when moved in the linear direction along the axis X.

The bearing 250 may comprise at least two bearing parts, namely a first bearing part 250A and a second bearing part 250B. There may be a gap between the first bearing part 250A and the second bearing part 250B in the linear direction along the X axis when positioned in the assembly 201. The first and second bearing parts can be seen in greater detail in figures 8A and 8B. Preferably, the bearing 250 is positioned on an inner surface of the second part 212. The bearing is preferably positioned between the dial and the component, and more specifically between the dial and the second part 212. Providing separate bearing parts allows for easier manufacture of the assembly 201 and thus, is beneficial in reducing cost. The first bearing part 250A and/or the second bearing part 250B may be press fit onto a respective end of the shaft 222 and/or second part 212. Additionally or alternatively, the first bearing part 250A and/or the second bearing part 250B may be joined/bonded using adhesive and/or held in place from above/ below by another retaining component. The second bearing parts 250B may be retained, e.g. by press fit and/or another alternative means, by the first part 211. Although figure 7 shows two separate bearing parts (one at the top and one at the bottom of the shaft 222), a single bearing may be provided, preferably which extends along the length of the shaft 222 (below the support 228).

The first bearing part 250B comprises a first main central cylindrical portion 251A and a first flange portion 252A. The second bearing part 250B comprises a second main central cylindrical portion 251B and a second flange portion 252B. The main cylindrical portions sitting within a central aperture in the second part 212. The main cylindrical portions being positioned between the shaft 222 and the second part 212. The first flange portion 252A may be positioned on a surface of the second part 212 between the second part 212 and the plate 228. The second flange portion 252B may be positioned on a base surface of the second part 212.

As with the above embodiments, the assembly 201 is configured to resist removal of the dial 220 from the assembly 201. In the present embodiment, the shaft 222 comprises a notch 223 in which a retaining ring 236 can be positioned (as described above in relation to notch 123 and retaining ring 136 of the first embodiment). The retaining ring 236 is positioned between the shaft 222 of the dial 220 and the second bearing part 250B. The retaining ring 236 is configured to resist removal of the dial 220 from the assembly 201 and retain the second bearing part 250B between the dial 220 and the component 210, particularly the second part 212 of the component 210.

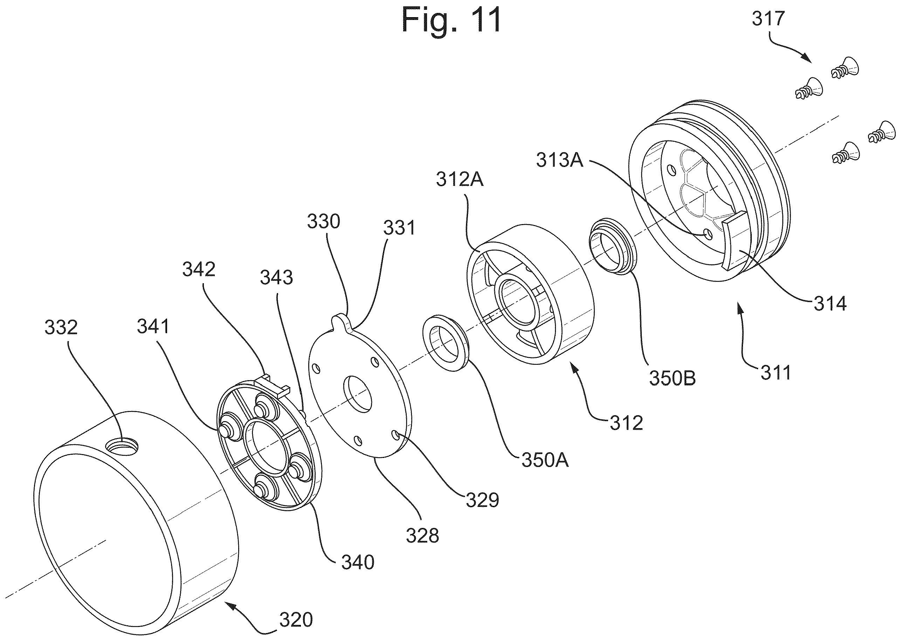

Figure 10 depicts a third embodiment of the present invention with various parts of the embodiment shown in an exploded view in figure 11.

The assembly 301 as shown in figures 10 and 11may include many of the same, or similar, parts as the assembly 101 described in relation to figures 1-3b. For example, the assembly 301 comprises a component 310, a dial 320, an indicator 321, a spring back member 340, a plate 328, a seal 360, a magnet 370 and a sensor 380 which are similar to the component 110, dial 120, indicator 121, spring back member 140, plate 128, seal 160, magnet 170 and sensor 180 respectively, and provide similar movement of the assembly, as described in relation to the first embodiment (including any alternatives, e.g. alternative sensors etc.). Due to the similarities of certain parts of these embodiments, only the differences between the present embodiment and assembly 101 of the first embodiment will be described.

The component 310 may be made of multiple parts, such as the first part 311 and the second part 312 as shown in figures 10 and 11. The first part 311 of the component 310 may be joined to the second part 312 of the component 210. The first part 211 and the second part 212 may be connected via screws 317. Only one screw may be provided. The first part 311 and the second part 312 may be joined together using any appropriate means. For example, posts may be provided in one part and corresponding apertures may be provided in the other part, as described in relation to the second embodiment. For example, the first part and the second part may be connected with an alternative mechanical fastener(s), adhesive and/or welded together.

In the first embodiment, the plate 128 was supported on the bearing 150. In the present embodiment, the plate 328 is supported on bearing 350. However, the bearing 350 only provides support to the plate 328 in a central zone surrounding the shaft 322.

As shown in figures 10 and 11, the second part 312 may comprise an outer ring 312A. The outer ring 312A is provided as a radially outer sleeve of the second part 312. The outer ring 312A extends towards the support 328. The outer ring 312A may support an outer part of the plate 328. The outer ring 312A may thus reduce or prevent rocking of the dial 328. The second part 312, and particularly the outer ring 312A, may be formed of low friction material, for example acetal, to provide smoother operation of the dial during rotation (even though the plate 328 is in contact with the second part 312).

The outer ring 312A may allow for a gap (not shown) between the base of the support 328 when the support 328 is orthogonal to the shaft 322. In this case, the outer ring 312A may provide a similar function to the support posts 215 described in the previous embodiment. However, the outer ring 312A may provide an additional benefit if provided as a substantially continuous portion around the whole circumference of the second part 312 in that the this may provide smoother rotation when there is any rocking of the dial 320. As the dial 320 is rotated by a user, the outer ring 312A may be beneficial in avoiding significant rocking of the dial 320. Thus, the outer ring 312A can retain the support 328 and the button membrane 340 in a substantially orthogonal position relative to the shaft 322.

As previously described, providing the component 310 in at least two parts may be beneficial for putting the assembly 301 together.

The first part 311 may be similar, or even the same, as the component 110 described in relation to the first embodiment as shown in figures 1-5 with the exception of including screw holes (which are optionally provided in the present embodiment). The first part 311 may therefore comprise an end stop 314 which corresponds to, or is the same as end stop 114 described above. Other variations of end stop are also available, as previously described.

As described in the previous embodiment, the bearing 350 may be provided in two parts. The bearing 350 may comprise a first bearing part 350A and a second bearing part 350B. Preferably, the bearing 350 is positioned on an inner surface of the second part 312. The bearing is preferably positioned between the dial and the component, and more specifically between the dial and the second part 312. Providing separate bearing parts allows for easier manufacture of the assembly 301. Compared to the previous embodiment, in the present embodiment, the bearing 350 is smaller and only provides a small amount of contact between the second part 312 and the shaft 322. The bearing 350 may be press fit on to the second part 312 using tight tolerances (although the bearing may be held in place in other ways, e.g. using adhesive). In this embodiment, the bearing may not contact the first part 311. The shaft 222 may be configured to move freely, sliding up and down within the bearing, i.e. the bearing does not restrict movement of the dial in the linear direction along the axis X.

The first bearing part 350B comprises a first main central cylindrical portion and a first flange portion. The second bearing part 350B comprises a second main central cylindrical portion and a second flange portion. The main cylindrical portions sitting within a central aperture in the second part 312. The main cylindrical portions being positioned between the shaft 322 and the second part 312. The first flange portion may be positioned on a surface of the second part 312between the second part 312and the plate 328. The second flange portion may be positioned on a base surface of the second part 312.

As with the above embodiments, the assembly 301 is configured to resist removal of the dial 320 from the assembly 301. In the present embodiment, the shaft 322 comprises a notch 323 in which a retaining ring 336 can be positioned (as described above in relation to notch 123 and retaining ring 136 of the first embodiment). The retaining ring 336 is positioned between the shaft 322 of the dial 320 and the second bearing part 350B. The retaining ring 336 is configured to resist removal of the dial 320 from the assembly 301 and retain the second bearing part 350B between the dial 320 and the component 310, particularly the second part 312 of the component 310.

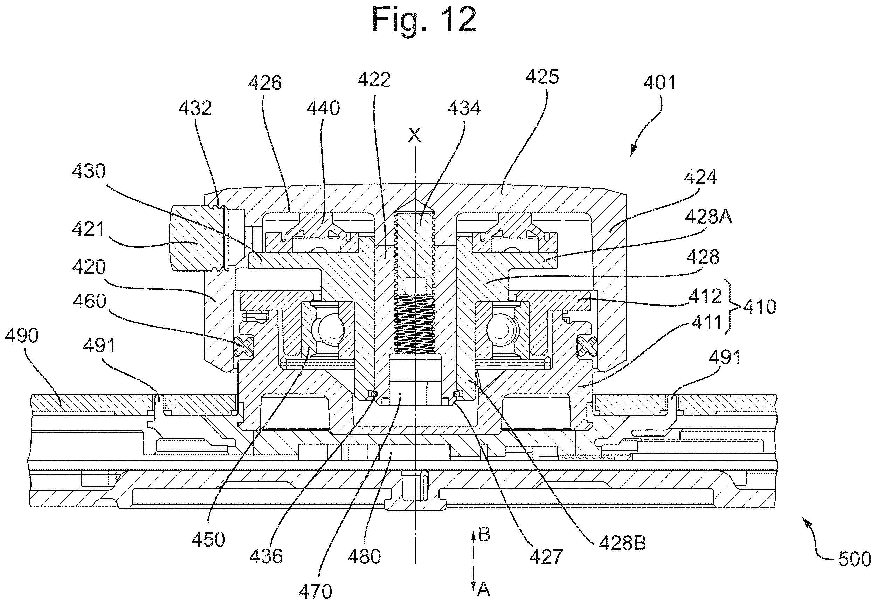

Figure 12 depicts a fourth embodiment of the present invention. The assembly 401 as shown in figure 12 may include many of the same, or similar, parts as the assembly 101 described in relation to figures 1-3b. For example, the assembly 401 comprises a component 410, a dial 420, an indicator 421, a spring back member 440, a seal 460, a magnet 470 and a sensor 480 which are similar to the component 110, dial 120, indicator 121, spring back member 140, seal 160, magnet 170 and sensor 180 respectively, and provide similar movement of the assembly, as described in relation to the first embodiment (including any alternatives, e.g. alternative sensors etc.). Due to the similarities of certain parts of these embodiments, only the differences between the present embodiment and assembly 101 of the first embodiment will be described.

The component 410 may be made of multiple parts, such as the first part 411 and the second part 412 as shown in figure 12. The first part 411 of the component 410 may be joined to the second part 412 of the component 410. The first part 411 and the second part 412 may be joined together using any appropriate means. For example, posts 415 may be provided in one part and corresponding apertures may be provided in the other part, as described in relation to the second embodiment. Additionally or alternatively, the first part 411 and the second part 412 may be connected with at least one screw, an alternative mechanical fastener(s), adhesive and/or welded together. As previously described, providing the component 410 in at least two parts may be beneficial for putting the assembly 401 together.

The first part 411 may be similar, or even the same, as the component 110 described in relation to the first embodiment as shown in figures 1-5. The first part 411 may therefore comprise an end stop (not shown) which corresponds to, or is the same as end stop 114 described above. Other variations of end stop are also available, as previously described.

The dial as shown in figure 12 may be provided in separate parts, such as the housing with the dial sleeve 424 and the main face 425 (which may or may not be integral) connected to the dial shaft 422. The dial shaft 422 may be connected to the housing by a screw 434, although any appropriate fastening means may be used. Alternatively, the shaft 422 and the housing may be integral.

In the first embodiment, the plate 128 was provided as a support for the button membrane 440. In the present embodiment, the support is provided by a support hub 428. In other words, the support plate 128 is replaced with support hub 428. The hub is similar to the plate in that it surrounds the shaft and supports the button membrane 440. The support hub 428 may comprise a plate portion 428A and a support shaft 428B. The plate portion 428A may correspond to the support plate 128 in that it supports the button membrane 440 and may optionally comprise protrusion 430 (which corresponds to protrusion 130). The support hub 428, and in particular the support shaft 428B, extends along the length of the shaft 422. This is beneficial in reducing or preventing rocking of the dial 420 as the dial 420 is rotated. The support shaft 428B of the support hub 428 is positioned radially inwards of the bearing 450. The support hub 428 is provided between the bearing 450 and the shaft 422. The support hub 428 may be positioned on the bearing 450.

The bearing 450 may be a roller bearing, as shown, although any appropriate alternative bearing may be used.

As with the above embodiments, the assembly 401 is configured to resist removal of the dial 420 from the assembly 401. In the present embodiment, the shaft 422 comprises a notch 423 in which a retaining ring 436 can be positioned (as described above in relation to notch 123 and retaining ring 136 of the first embodiment). The retaining ring 436 is positioned between the shaft 422 of the dial 320 and the support hub 428, particularly the support shaft 428B. The retaining ring 436 is configured to resist removal of the dial 420 from the assembly 401. Specifically, the retaining ring 436 retains the dial 420, and particularly the dial shaft 422, on the support hub 428 by restricting linear movement when assembled.

The present invention may provide a controller fascia 490 comprising the assembly 401. Although the controller fascia is shown in figure 12 with assembly 401, the controller fascia 490, or a variation thereof, may be provided with any of the above described embodiments/alternatives.

The assembly 401 may be attached to the controller fascia 490 in any appropriate way. For example, snap fit connections (e.g. e.g. clip in portions 411A) may be used and/or adhesive and/or welding/melting of parts (e.g. parts of the component 410) to attach the assembly 401, and in particular, the first part 411 to the controller fascia. Multiple forms of fastening may be used to ensure a leak-proof connection. At least part of the component 410, e.g. the first part 411, may be attached to the controller fascia 490 in any appropriate way. At least part of the component 410, e.g. the first part 411, may be integral with the controller fascia 490. Thus, the controller fascia 490 may be manufactured with a portion shaped to form the relevant part of the component 410.

The controller fascia 490 may be at least partly configured to transmit light. The controller fascia 490 may comprise at least one, and preferably multiple, portions configured to transmit light. The controller fascia 490 may comprise translucent and/or transparent portions 491. Preferably, the translucent and/or transparent portions 491 may be radially outwards of the assembly 401 so that the translucent and/or transparent portions 491 are easily visible by user. This may be beneficial in providing light up portions around the assembly 401 which may provide feedback to a user about the input via the assembly 401. At least one of the translucent and/or transparent portions 491 may be shaped as a part of the circumference of a circle.

Additionally or alternatively, part of the assembly 401 may be formed of translucent and/or transparent material so as to transmit light. For example, at least part of the component 410, e.g. the first part 411, which is connected to, or forms part of, the controller fascia 490. This may provide a back-light to the assembly 401 which improves the aesthetics of the controller fascia and provides a back-light for the user to more easily use the assembly for providing an input in darker environments.

The present invention may provide a controller 500 for a water related system. The water related system may be a shower, or other domestic water system, e.g. a bath filler or basin tap. The controller is configured to control a characteristic of water flow in the water related system based on the input, i..e the user input via the dial. Thus, the controller may be configured to control the characteristic depending on the determined position of the dial along the axis X and/or the rotation of the dial. For example, the controller is configured to control the temperature and/or flow rate of water emitted from the water related system, e.g. the temperature and/or flow rate of the water emitted by the shower head. Another characteristic that may be controlled by the controller (additionally or alternatively) is the outlet selection of the water emitted from the water related system. For example, the water related system may have multiple outlets, such as a main shower head and an additional shower head, and the assembly may be used to select which outlet the water is emitted from.

The controller may comprise the assembly of any of the embodiments/variations described above/shown in the figures.

The controller may comprise the controller fascia 490 described above (albeit in combination with any of the embodiments and/or variations described above/shown in the other figures).

The controller is configured to determine an input based on the position of the dial along the axis and/or the rotation of the dial. For example, as the dial is rotated clockwise, this may result in an increase in a certain characteristic, e.g. an input to raise the set temperature. For example, as the dial is rotated anti-clockwise, this may result in a decrease in a certain characteristic, e.g. an input to lower the set temperature. The controller may be connected to the water related system by wiring, or wireless connection.

The controller may comprise at least one LED configured to provide light to the part of the controller configured to transmit light. The controller may control the LED to light up the relevant parts of the controller. For example, the LED may light up to provide visual feedback to a user when an input is provided. For example, if the translucent and/or transparent portions 491 are shaped as a part of the circumference of a circle radially outwards of the assembly, the LED may light up more of the circumference of the circle as an input is provided to increase a characteristic (e.g. temperature) and the LED may light up less of the circumference of the circle as an input is provided to decrease the characteristic. The amount of the circumference which is lit by the LED may directly correspond to the rotational position of the dial. Thus, the user can be provided with easily interpreted visual feedback when providing an input.

The controller may provide additional inputs apart from the assembly described above. For example, the controller may include at least one push-button and/or slider and/or touch screen. The controller may include a display portion configured to provide an electronic display to the user, e.g. to indicate the set temperature of the water to be/being emitted by the water related system.

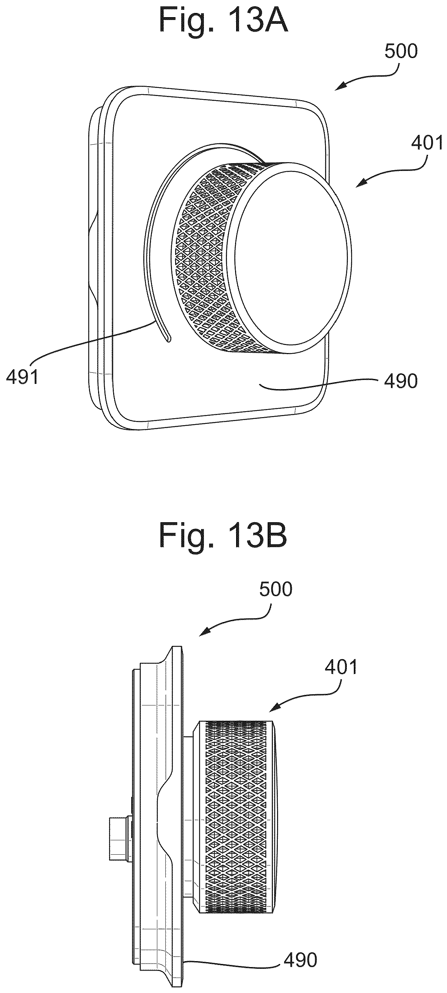

The controller may be provided as a control unit which is attachable to a wall, for example in a bathroom. The controller may be provided as a remote control, for example as shown in figures 13A and 13B. The remote control may be attachable to a wall, but may also be removable. The remote control may be a separate unit (i.e. which is not attached to the wall). In this case, the remote control may communicate with the water related system wirelessly. The remote control may be a scaled down version of the controller. The remote control is beneficial in that it allows users to activate the water related system, e.g. shower, from anywhere outside the bathroom. For example, the water related system can be turned on and set to run at a pre-set temperature. Pre-setting the temperature allows the water to reach the desired target so that when the user finally goes to use the water related system (e.g. shower or bath), the temperature is at the correct setting already. If a remote is situated outside of the bathroom, for example on the wall in the hallway or in a bedroom a user can start the water related system without having to go in to the bathroom. Multiple remote controls could be provided for a single water related system. Separate remote controls may be provided for separate parts of a water related system, for example, if the water related system includes a shower and a bath, a remote control may be provided for each.

Providing a remote control which is capable of controlling temperature may be particularly useful. In particular, this would provide the user with the capability to adjust temperature using a remote that is situated outside of the shower cubicle/ bathroom environment.

The present invention may provide a water related system. The water related system may comprise a valve unit configured to alter a characteristic of water flow in the water related system in response to an input determined based on the position of the dial along the axis and/or the rotation of the dial. The water related system may be a shower, or other domestic water system, e.g. a bath filler or basin tap. The water emitted by the water related system may be controlled by the controller. The device may be disposed within a wet environment of the water related system, preferably wherein the water related system is a shower and wherein the device is disposed within a cubicle of the shower. The device may be disposed adjacent to a wet environment of the water related system, e.g. above a basin or bath, i.e. within any distance whilst still providing a safe input controller.

In the above embodiments, the movement of the dial may be restricted. The assembly may be configured to restrict movement of the dial relative to the component to only the linear direction along the axis X and rotation about the axis X. Thus, the dial may not rotate about other axes and/or move in other linear directions. In other words, the dial may only be moved in the linear direction along axis X and rotated about the axis X (either independently or simultaneously). This is beneficial in that the assembly is easy to use as input is via push and/or rotation only. Additionally, it is beneficial to avoid rocking or wobbling of the dial, which may negatively impact the feel of the dial for the user. The assembly may restrict movement of the dial due to the interaction between the dial (and in particular, the shaft) and the bearing, which may be retained in the component. The assembly may restrict movement of the dial due to the support, and in particular, the support hub (if provided) in combination with the bearing and/or component. The seal may also assist in restricting movement of the dial, due to interaction between the dial (and in particular, the dial sleeve) and the seal surrounding the component.

Although the dial is described and shown throughout the figures as cylindrical, the dial may be any appropriate shape, e.g. triangular or square or oval, etc.. Additionally, the above embodiments could be adapted to provide the dial, with the shaft, main face and dial sleeve as separate connected parts or as integral parts. If these parts are separate and connected, any appropriate fastening means can be used.

In the above embodiments, the rotation of the dial may be limited (e.g. by using end stops or another limiter), or could be infinite. It may be preferable for the rotation of the dial to be limited, for example to 270 degrees. Alternatively, it may be preferable for rotation of the dial to be infinite. In particular, if the dial is infinite, this may be particularly useful if used for a controller/remote which is part of a system with multiple assemblies/controllers so as to allow the controllers/remotes to sync without relying on more complicated electronics to account for previous inputs.

In the above embodiments, various different bearings are shown and described. The bearings used in different embodiments may be interchangeable (for example, an embodiment with a bearing in two parts may be provided with a single bearing part, or an embodiment with a single bearing part may be provided with a bearing in two or more parts). The bearings may be made of any appropriate material. The bearings may be Igus^{®} bearings, e.g. two Igus^{®} flanged bearings may be used in the embodiment shown in figure 7. Alternative bearings may be used, e.g. any flanged bearing, sleeve bearing, plain bearing, roller bearing, etc. The seal is preferred, but is not a necessity. For example, if there is only a small gap, i.e. with tight tolerances, between the dial and the component (or relevant component part), then this may be enough to reduce or prevent ingress of water without a seal.

In embodiments and variations described above, some components are retained relative to each other by use of a snap ring and/or retaining ring. Any appropriate retaining means or mechanism may be used. For example, instead of a retaining ring between the shaft and the bearing or support, the shaft may have a small flange which resists removal of the dial.

The assembly/controller fascia/controller may be used for any water related system as described above. The assembly/controller fascia/controller may be used to control other devices, e.g. such as electronic doorbells, for selection/control of audio/music from a speaker, shower profiles /or and lighting adjustment to name a few.

As will be understood, features from different embodiments and variations can be swapped/interchanged.

The orientation depicted and referred to in the description drawings used for reference only and for the purposes of explaining the invention. It will be understood that the orientation of the assembly will depend on how the assembly is used and how it may be attached to an object or surface. It is noted that many of the figures depict the assembly with the dial facing up, but in practice the assembly will normally be rotated 90 degrees when attached to a wall. The assembly may be fixed in a variety of ways.

Embodiments of the invention are provided in the clauses below:
1. An assembly for use in a wet environment, the assembly comprising:
   a component;
   a dial which is movable relative to the component in a linear direction along an axis and is rotatable relative to the component about the axis;
   a spring-back member configured to move the dial parallel to the axis to return the dial to a predefined position along the axis;
   a bearing positioned between the dial and the component; and
   a sensor configured to detect the position of the dial along the axis and/or the rotation of the dial.
2. The assembly of clause 1, further comprising a magnet, wherein the magnet is attached to the dial.
   3The assembly of clause 2, wherein the sensor is configured to detect the position of the dial along the axis and the rotation of the dial based on the magnet attached to the dial.
   4. The assembly of either of clauses 2 or 3, wherein the magnet is a diametric magnet and the sensor is a three-axis hall sensor.
5. The assembly of any one of the preceding clauses, wherein the dial is on one side of the component, and the sensor is positioned on an opposing side of the component, or the sensor is positioned within the component and/or part of a controller fascia.
6. The assembly of any one of the preceding clauses, wherein at least part of the component forms at least part of a controller fascia, preferably wherein the at least part of the component is integral with the control panel fascia and/or wherein the at least part of the component forms a solid boundary.
7. The assembly of any one of the preceding clauses, wherein the component comprises an end stop configured to define at least one end of the range of linear movement of the dial and/or the ends of the range of rotational movement of the dial.
8. The assembly of any one of the preceding clauses, further comprising a seal between the component and the dial.
9. The assembly of any one of the preceding clauses, wherein the assembly is configured to resist removal of the dial from the assembly.
10. The assembly of any one of the preceding clauses, wherein the dial comprises a shaft about which the dial rotates, and the bearing is positioned between the shaft and the component.
11. The assembly of clause 10, wherein the dial comprises: (i) a cover and a housing, wherein the shaft is connected to the housing by a screw and the cover attaches to the housing to conceal the screw; or(ii) a housing, wherein the shaft and housing are integral.
12. The assembly of any one of the preceding clauses, wherein the dial comprises an indicator.
13. The assembly of any one of the preceding clauses, wherein the dial and the spring back member are configured to rotate together.
14. The assembly of either of any one of the preceding clauses, wherein the spring back member is a button membrane formed of elastic material.
15. The assembly of any one of the preceding clauses, further comprising a support configured to support the spring back member, wherein the spring back member is positioned between the support and the dial.
16. The assembly of clause 15, wherein the support and spring back member are configured to rotate together, preferably wherein the spring back member comprises projections and the support comprises corresponding receiving portions.
17. The assembly of either of clauses 15 or 16, wherein the support comprises a protrusion configured to prevent relative rotation between the support and the dial.
18. The assembly of any one of clauses 15 to 17, wherein the support is an annular plate or hub surrounding the shaft.
19. The assembly of any one of the preceding clauses, wherein the bearing is retained by a snap fit ring positioned between the bearing and the component.
20. The assembly of any one of the preceding clauses, further comprising a retaining ring positioned between the dial and the bearing, the retaining ring being configured to resist removal of the dial from the assembly.
21. The assembly of any one of the preceding clauses, wherein an end stop of the component is configured to limit rotation of the dial relative to the component by preventing further rotational movement of the protrusion
22. The assembly of any one of the preceding clauses, wherein the component comprises a first part and a second part, wherein the bearing is positioned on an inner surface of the one of the parts of the component.
23. The assembly of clause 22, wherein an end stop of the component is configured to limit rotation of the dial relative to the component by preventing further rotational movement of the protrusion, preferably wherein the end stop is a protrusion on the first part or the second part of the component.
24. The assembly of either of clauses 22 or 23, wherein the first part is joined to the second part, optionally wherein the first part and the second part are welded together and/or comprising at least one fastening mechanism to join the first and second part, preferably screws.
25. The assembly of any one of the preceding clauses, wherein the bearing comprises a first bearing part and a second bearing part
26. The assembly of clause 25, further comprising a retaining ring positioned between the dial and one of the bearing parts, the retaining ring being configured to resist removal of the dial from the assembly and retain said bearing part between the dial and the component.
27. The assembly of any one of clauses 1 to 24, wherein the bearing is a roller bearing.
28. The assembly of clause 27, wherein the component is configured to retain the bearing.
29. A controller fascia for a water related system comprising the assembly of any one of the preceding clauses.
30. The controller fascia of clause 29, the controller fascia being at least partly configured to transmit light.
31. The controller fascia of clause 30, comprising at least one translucent and/or transparent portion radially outwards of the assembly and/or wherein part of the assembly is formed of translucent and/or transparent material.
32. A controller for a water related system, the controller comprising the assembly of any one of clauses 1 to 28, wherein the controller is configured to determine an input based on the position of the dial along the axis and/or the rotation of the dial and the controller is configured to control a characteristic of water flow in the water related system based on the input.
33. A controller for a water related system, the controller comprising the controller fascia of any one of clauses 29 to 31, wherein the controller is configured to determine an input based on the position of the dial along the axis and/or the rotation of the dial and the controller is configured to control a characteristic of water flow in the water related system based on the input.
34. The controller of either of clauses 32 or 33, further comprising at least one LED configured to provide light to the part of the controller configured to transmit light.
35. The controller of any one of clauses 32 to 34, wherein the characteristic of water flow is the temperature and/or flow rate and/or outlet selection of the water emitted from the water related system.
36. The controller of any one of clauses 32 to 35, wherein the controller is a remote control.
37. A water related system comprising the controller of any one of clauses 32 to 36, preferably wherein the water related system is a shower.
38. The water related system of clause 37, wherein the assembly is disposed within a wet environment of the water related system, preferably wherein the water related system is a shower and wherein the assembly is disposed within a cubicle of the shower.
39. The water related system of either of clauses 37 or 38, wherein the water related system comprises a valve unit configured to alter a characteristic of water flow in the water related system in response to an input determined based on the position of the dial along the axis and/or the rotation of the dial.

## Claims

1. An assembly for use in a wet environment, the assembly comprising:
a component;
a dial which is movable relative to the component in a linear direction along an axis and is rotatable relative to the component about the axis;
a spring-back member configured to move the dial parallel to the axis to return the dial to a predefined position along the axis;
a bearing positioned between the dial and the component; and
a sensor configured to detect the position of the dial along the axis and/or the rotation of the dial.

2. The assembly of claim 1, further comprising a magnet, wherein the magnet is attached to the dial, preferably wherein:
(i) the sensor is configured to detect the position of the dial along the axis and the rotation of the dial based on the magnet attached to the dial; and/or
(ii) the magnet is a diametric magnet and the sensor is a three-axis hall sensor.

3. The assembly of any one of the preceding claims, wherein
(a) at least part of the component forms at least part of a controller fascia, preferably wherein the at least part of the component is integral with the control panel fascia and/or wherein the at least part of the component forms a solid boundary; and/or
(b) the component comprises an end stop configured to define at least one end of the range of linear movement of the dial and/or the ends of the range of rotational movement of the dial; and/or
(c) the assembly is configured to resist removal of the dial from the assembly.

4. The assembly of any one of the preceding claims, wherein:
(a) the dial is on one side of the component, and the sensor is positioned on an opposing side of the component, or the sensor is positioned within the component and/or part of a controller fascia; and/or
(b) the dial comprises a shaft about which the dial rotates, and the bearing is positioned between the shaft and the component, optionally wherein the dial comprises: (i) a cover and a housing, wherein the shaft is connected to the housing by a screw and the cover attaches to the housing to conceal the screw; or (ii) a housing, wherein the shaft and housing are integral.

5. The assembly of any one of the preceding claims, wherein:
(a) the dial comprises an indicator; and/or
(b) the dial and the spring back member are configured to rotate together; and/or
(c) the spring back member is a button membrane formed of elastic material.

6. The assembly of any one of the preceding claims, further comprising:
(a) a seal between the component and the dial; and/or
(b) a support configured to support the spring back member, wherein the spring back member is positioned between the support and the dial, optionally wherein (i) the support and spring back member are configured to rotate together, preferably wherein the spring back member comprises projections and the support comprises corresponding receiving portions, and/or (ii) the support comprises a protrusion configured to prevent relative rotation between the support and the dial, and/or (iii) the support is an annular plate or hub surrounding the shaft; and/or
(c) a retaining ring positioned between the dial and the bearing, the retaining ring being configured to resist removal of the dial from the assembly.

7. The assembly of any one of the preceding claims, wherein:
(a) the bearing is retained by a snap fit ring positioned between the bearing and the component; and/or
(b) an end stop of the component is configured to limit rotation of the dial relative to the component by preventing further rotational movement of the protrusion

8. The assembly of any one of the preceding claims, wherein the component comprises a first part and a second part, wherein the bearing is positioned on an inner surface of the one of the parts of the component, preferably wherein:
(i) an end stop of the component is configured to limit rotation of the dial relative to the component by preventing further rotational movement of the protrusion, preferably wherein the end stop is a protrusion on the first part or the second part of the component; and/or
(ii) the first part is joined to the second part, optionally wherein the first part and the second part are welded together and/or comprising at least one fastening mechanism to join the first and second part, preferably screws.

9. The assembly of any one of the preceding claims, wherein:
(a) the bearing comprises a first bearing part and a second bearing part, optionally further comprising a retaining ring positioned between the dial and one of the bearing parts, the retaining ring being configured to resist removal of the dial from the assembly and retain said bearing part between the dial and the component; or
(b) the bearing is a roller bearing, preferably wherein the component is configured to retain the bearing.

10. A controller fascia for a water related system comprising the assembly of any one of the preceding claims.

11. The controller fascia of claim 10, the controller fascia being at least partly configured to transmit light, preferably comprising at least one translucent and/or transparent portion radially outwards of the assembly and/or wherein part of the assembly is formed of translucent and/or transparent material.

12. A controller for a water related system, the controller comprising the assembly of any one of claims 1 to 9 or the controller fascia of any one of claims 10 to 11, wherein the controller is configured to determine an input based on the position of the dial along the axis and/or the rotation of the dial and the controller is configured to control a characteristic of water flow in the water related system based on the input.

13. The controller of claim 12:
(a) further comprising at least one LED configured to provide light to the part of the controller configured to transmit light; and/or
(b) the characteristic of water flow is the temperature and/or flow rate and/or outlet selection of the water emitted from the water related system; and/or
(c) the controller is a remote control.

14. A water related system comprising the controller of any one of claims 12 to 13, preferably wherein the water related system is a shower.

15. The water related system of claim 14, wherein:
(a) the assembly is disposed within a wet environment of the water related system, preferably wherein the water related system is a shower and wherein the assembly is disposed within a cubicle of the shower; and/or
(b) the water related system comprises a valve unit configured to alter a characteristic of water flow in the water related system in response to an input determined based on the position of the dial along the axis and/or the rotation of the dial.
